Europäisches Patentamt

European Patent Office

Office européen des brevets

(19)

(11) Numéro de publication: **0 223 107**
**B1**

(12) **FASCICULE DE BREVET EUROPEEN**

(45) Date de publication du fascicule du brevet: **23.05.90**

(51) Int. Cl.⁵: **H 02 K 55/04**

(21) Numéro de dépôt: **86114862.5**

(22) Date de dépôt: **27.10.86**

(54) **Machine synchrone à enroulements stator et rotor supraconducteurs.**

(30) Priorité: **30.10.85 FR 8516142**

(43) Date de publication de la demande:
**27.05.87 Bulletin 87/22**

(45) Mention de la délivrance du brevet:
**23.05.90 Bulletin 90/21**

(84) Etats contractants désignés:
**AT BE CH DE ES FR GB GR IT LI LU NL SE**

(56) Documents cités:
**FR-A-2 275 053**
**FR-A-2 306 234**

**PATENTS ABSTRACTS OF JAPAN, vol. 8, no. 111 (E-246)1548r, 24 mai 1984; & JP-A-59 25 546 (TORAO SUZAKI) 09-02-1984**

(73) Titulaire: **GEC ALSTHOM SA**
**38, avenue Kléber**
**F-75116 Paris (FR)**

(72) Inventeur: **Laumond, Yves**
**3, rue des Champs Andelnans**
**F-90400 Danjoutin (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La présente invention concerne une machine synchrone, à rotor solidaire d'un arbre porté par des paliers, à enroulements stator et rotor supraconducteurs refroidis par de l'hélium à très basse température, chacun des enroulements et l'entrefer étant dans une enceinte sous vide.

On a déjà proposé dans le brevet FR-A-2319233 de la Demanderesse et d'Electricité de France de refroidir le supraconducteur d'un cryoalternateur par une circulation d'hélium sous une pression superieure à sa pression critique et à une température voisine de 4°K, cet hélium parcourant un circuit à partir d'un réfrigérateur à hélium, l'hélium partiellement réchauffé au contact du rotor étant renvoyé à l'aspiration du réfrigérateur.

Ce brevet ne prévoyait pas que le stator soit également supraconducteur, mais il était normal de prévoir dans ce cas en parallèle un second circuit assurant le refroidissement du stator.

Un tel système de refroidissement est relativement complexe et onéreux, et nécessite un système de canaux de circulation de l'hélium dans les enroulements du stator, de dimensions plus importantes que celles du rotor.

La présente invention a pour but de procurer une machine synchrone à enroulements stator et rotor supraconducteurs comportant un système de refroidissement plus simple et moins coûteux.

La machine synchrone selon l'invention est caractérisée en ce que les enroulements du stator sont refroidis par un bain d'hélium liquide, en ce que ceux du rotor sont refroidis par une circulation d'hélium au dessus de sa pression critique, la circulation d'hélium audessus de sa pression critique et le bain d'hélium liquide font partie d'un circuit de réfrigération d'hélium initialement sous pression élevée, détendu à une pression un peu supérieure à sa pression critique, refroidi dans un échangeur disposé dans le bain d'hélium liquide, réchauffé au contact des enroulements du rotor, puis liquifié par détente et réuni au bain d'hélium liquide.

De préférence, les enroulements du stator et du rotor sont disposés dans des enceintes sous vide scellé, et l'entrefer est relié à une source de vide, et séparé des paliers de l'arbre par des joints à huile résistant au vide. Ces vides peuvent d'ailleurs être communs, comme proposé dans le fascicule de brevet français FR-A-2589017.

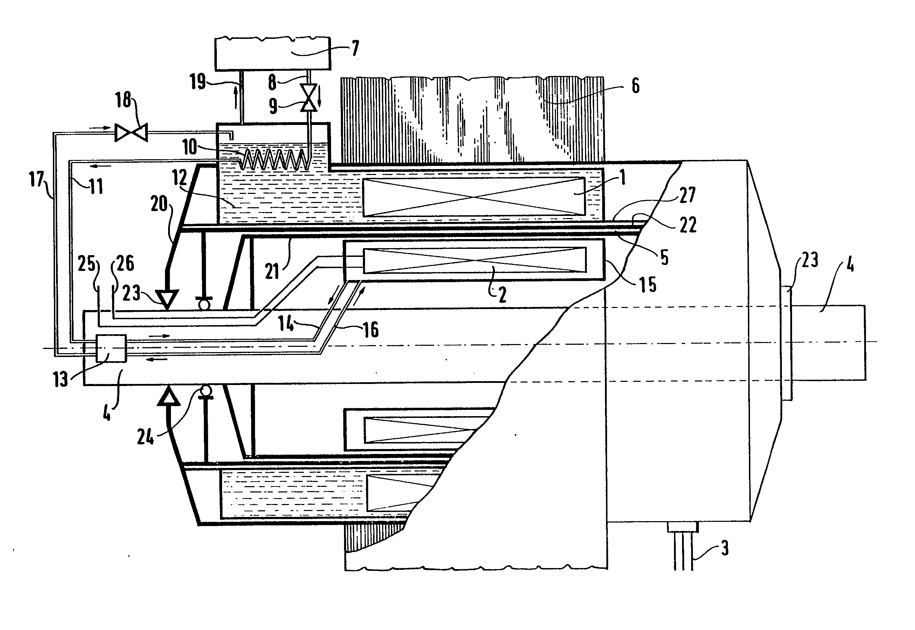

Il est décrit ci-après, à titre d'exemple et en référence à la figure schématique unique du dessin annexé, un alternateur synchrone selon l'invention.

L'alternateur comprend des enroulements statoriques triphasés en matériau supraconducteur 1 et des enroulements rotoriques 2 également supraconducteurs. Du stator partent des conducteurs triphasés 3 vers l'utilisation. Le rotor est porté par un arbre 4, et sa périphérie, délimitée par la cloison cylindrique 21, est séparée du stator par un entrefer 5.

En vis-à-vis de la cloison 21, le stator est séparé de l'entrefer par la cloison cylindrique 22. Autour du stator est disposé un circuit magnétique feuilleté 6, empêchant le flux magnétique de sortir de la machine.

Le circuit de réfrigération des enroulements est le suivant. Un réfrigérateur à l'hélium de type connu 7 comprime de l'hélium à une pression élevée et à une température suffisamment basse. Cet hélium refoulé par le conduit 8 passe dans une vanne de détente 9, où elle se détend à une pression de 3 bars absolus, un peu supérieure à sa pression critique. Il est sous refroidi dans les tubes d'échange de chaleur représentés schématiquement en 10, immergés dans un bain d'hélium lium liquide 12 sous pression très légèrement supérieure à la pression atmosphérique. Ainsi refroidi à environ 4,2°K, il se rend par le conduit 11 à un joint tournant à baïonnette disposé dans l'arbre 4 du rotor, tel que celui qui a fait l'objet du brevet FR-A-2319233 du 22 Juillet 1975, et de son certificat d'addition FR-A-2371806, aux noms de la Demanderesse et d'Electricité de France, qui sépare les flux d'hélium entrant dans le rotor et d'hélium sortant réchauffé.

Ce joint tournant et le joint tournant sur le flux de retour de l'hélium, concentrique au premier, sont schématisés par le cercle repère 13.

Du joint tournant l'hélium passe par le conduit 14 dans l'enveloppe 15 entourant les enroulements supraconducteurs du rotor. Il passe dans des canaux de refroidissement de ces enroulements, qu'il refroidit à environ 5°K, puis revient par le conduit 16 dans un second joint tournant entourant le précédent et séparant le flux d'hélium légèrement réchauffé (4,5°K) de la température ambiante.

De ce joint tournant, l'hélium sous pression supérieure à sa pression critique passe par le conduit 17 dans la vanne de détente 18, au voisinage de la pression atmosphérique, où il se liquéfie en grande partie, puis est introduit dans le bain d'hélium liquide 12. Les vapeurs formées dans le bain d'hélium liquide, tant par l'échange de chaleur avec les enroulements du stator que par celui avec l'hélium gazeux sous pression supérieure à sa pression critique dans l'échangeur 10, sont évacuées par le conduit 19 et renvoyées au compresseur du réfrigérateur à hélium 7.

L'ensemble du stator et du rotor est contenu dans une enveloppe commune 20 portant des paliers 23 de support de l'arbre du rotor. L'entrefer 5, relié à une source de vide non représentée, est séparé de l'atmosphère ambiante par des joints à huile tenant au vide 24. Les enroulements du rotor sont reliés à une alimentation électrique par des conducteurs 25, 26. Le stator est muni sur sa périphérie du côté de l'entrefer d'un tube de transition thermique et de transmission du couple 27.

## Revendications

1. Machine synchrone à rotor solidaire d'un arbre porté par des paliers (23), à enroulements stator (1) et rotor (2) supraconducteurs refroidis par de l'hélium à très basse température, chacun des enroulements et l'entrefer (5) étant dans une enceinte sous vide, caractérisée en ce que les enroulements du stator sont refroidis par un bain d'hélium liquide (12), en ce que ceux du rotor sont refroidis par une circulation d'hélium au-dessus de sa pression critique (14, 15, 16), et en ce que la circulation d'hélium au-dessus de sa pression critique et le bain d'hélium liquide font partie d'un circuit de réfrigération d'hélium, initialement sous pression élevée, détendu (8) à une pression un peu supérieure à sa pression critique, refroidi dans un échangeur (10) disposé dans le bain d'hélium liquide, réchauffé au contact des enroulements du rotor, puis liquéfié par détente (18) et réuni au bain d'hélium liquide (12).

2. Machine selon la revendication 1, caractérisée en ce que les enroulements du stator et du rotor sont disposés dans des enceintes sous vide scellé, et en ce que l'entrefer (5) est relié à une source de vide, et séparé des paliers (23) par des joints à huile résistant au vide (24).

**Patentansprüche**

1. Synchronmaschine mit einem Rotor, der fest mit einer von Lagern (23) getragenen Welle verbunden ist mit supraleitenden Stator- (1) und Rotorwicklungen (2), die durch Helium sehr tiefer Temperatur gekühlt werden, wobei jede der Wicklungen und der Luftspalt (5) sich in einem Vakuumraum befinden, dadurch gekennzeichnet, daß die Wicklungen des Stators durch ein Bad flüssigen Heliums (12) gekühlt werden, daß die Wicklungen des Rotors durch einen Umlauf von Helium oberhalb seines kritischen Drucks (14, 15, 16) gekühlt werden, und daß der Heliumumlauf oberhalb seines kritischen Drucks und das flüssige Heliumbad Teil eines Helium kühlkreises sind, der ursprünglich unter erhöhtem Druck ist auf einen Druck knapp oberhalb seines kritischen Drucks entspannt wird (8), in einem Wärmetauscher (10) gekühlt, der sich im flüssigen Heliumbad befindet, in Kontakt mit den Wicklungen des Rotors erwärmt und dann durch Entspannung (18) verflüssigt und mit dem flüssigen Heliumbad (12) vereint wird.

2. Maschine nach Anspruch 1, dadurch gekennzeichnet, daß die Wicklungen des Stators und des Rotors in dichten Vakuumräumen angeordnet sind, und daß der Luftspalt (5) mit einer Vakuumquelle verbunden und von den Lagern (23) durch vakuumfeste Öldichtungen (24) getrennt ist.

**Claims**

1. A synchronous machine having a rotor which is fixed to a shaft supported by bearings (23), with superconducting stator (1) and rotor windings (2) which are cooled down to very low temperature by helium, each of the windings and the magnetic gap (5) being in a vacuum enclosure, characterized in that the stator windings are cooled by a bath of liquid helium (12), that the rotor windings are cooled by a flow of helium above its critical pressure (14, 15, 16) and that said flow of heli um above its criticial pressure and said liquid helium bath constitute parts of a helium cooling circuit where helium is initially under high pressure, then expanded (8) to a pressure slightly above its critical pressure, then cooled in a heat exchanger (10) disposed in the liquid helium bath, then heated by contact with the rotor windings, then liquefied by further expansion (18) and is finally returned to the liquid helium bath (12).

2. A machine according to claim 1, characterized in that the stator and rotor windings are disposed in sealed vacuum enclo sures, and that the magnetic gap (5) is connected to a vacuum source and is separated from the bearings (23) by vacuumproof oil seals (24).

EP 0 223 107 B1